# EUROPEAN PATENT APPLICATION

(11) **EP 2 768 178 A1**
(43) Date of publication of application: **20.08.2014**
(21) Application number: 13305170.6
(22) Date of filing: 14.02.2013
(51) Int. Cl.: H04L 9/32, H04L 29/06, H04L 9/08

(54) **Method of privacy-preserving proof of reliability between three communicating parties**

(71) Applicant: Gemalto SA, 92190 Meudon (FR)
(72) Inventor: Gouget, Aline, 92190 Meudon (FR); Faher, Mourad, 92190 Meudon (FR); Joffray, Olivier, 92190 Meudon (FR); Tripotin, Guennolé, 92190 Meudon (FR)
(74) Representative: Lotaut, Yacine Diaw

(57) **Abstract**

The present invention concerns a secure method for a card to verify the validity of a second party certificate through a third party whereas the certificate's owner remains unknown to the third party. For that, the invention proposes a method wherein the card transmits to the third party two elements:
- the identifier of the Certification Authority, denoted by CAref,
- an encrypted message ENC(SN)[PKEnC_{CA]}, where PKEnc_{CA} is a public encryption key of the certification authority CA and SN is an anonymous identifier of the second party.

Next, the third party transmits a request status revocation of the certificate including the data (CAref, ENC(SN)[PKEnc_{CA}]) to the certification authority corresponding to CAref.

Next, the corresponding certification authority decrypts the value ENC(SN)[PKEnc_{CA}] and next retrieves the anonymous identifier. Based on the anonymous identifier, the certification authority can check the status revocation of the certificate.

The certification authority answers the request to the identity provider which can then transmit it to the card.

## Description

### TECHNICAL FIELD

The present invention relates to a method of privacy-preserving proof of reliability between three communications parties. In particular, the present invention concerns a secure method for a card to verify the validity of a certificate through a third party whereas the certificate's owner remains unknown to the third party.

### BACKGROUND ART

A public key infrastructure (PKI) provides a model through which electronic devices may authenticate themselves to each other and exchange encrypted messages. PKI is described in industry standards, for example International Telecommunication Union, *Information technology-Open Systems Interconnection-The Directory: Public-key and attribute certificate frameworks.* This standard is known as "X.509", and may be found on the Internet at http://www.itu.int/rec/T-REC-X.509/en.

In a PKI system, a trusted authority known as a certificate authority (CA) issues certificates for proving the identity of persons and organizations. The certificate issued by the CA typically includes the name of the CA that issued the certificate, the name of the party to whom the certificate is issued, a public key of the party, and the public key of the party signed (typically by encrypting a digest of the public key) by a private key of the CA.

Certificates are issued with a planned lifetime, which is defined through a validity start time and an explicit expiration date. For example, a certificate may be issued with a validity of one day, thirty years, or even longer. Once issued, a certificate becomes valid when its validity time has been reached, and it is considered valid until its expiration date. However, various circumstances may cause a certificate to become invalid prior to the expiration of the validity period. Such circumstances include change of name (for example, requiring to change the subject of a certificate due to an employee's change of name), change of association between subject and CA (for example, when an employee terminates employment with an organization), and compromise or suspected compromise of the corresponding private key. Under such circumstances, the issuing CA needs to revoke the certificate.

For certificate status to be determined, public key infrastructure (PKI) certificate revocation information must be made available to individuals, computers, network devices, and applications attempting to verify the validity of certificates. There are several mechanisms to represent revocation information. RFC 2560 defines one such method. This method involves each CA periodically issuing a signed data structure called a certificate revocation list (CRL). A CRL is a list identifying revoked certificates, which is signed by a CA and made available at a public distribution point. The CRL has a limited validity period, and updated versions of the CRL are published when the previous CRL's validity period expires. Each revoked certificate is identified in a CRL by its certificate serial number.

In the recent years X.509 certificates have been used more and more in smart cards in order to validate users, establish secure channels or perform secure transactions. The Electronic Identity card ("eID" or "EIC") is one example.

Nowadays, many smart card applications utilizing public key cryptography require storage and use of a certificate on a smart card. Thus, an efficient mechanism for certificate validation on smart cards is considered essential. However, an implementation of such a mechanism has to address some issues, mainly caused by limitations of the smart card environment.

First of all, it is considered more secure and efficient for a smart card application to be able to determine the validity of a certificate without having to rely on an application that does not reside on the card. The hard to tamper nature of the card makes resident application and data more trustworthy and secure.

On the other hand, the delegation of the verification of the certificate to a client-middleware installed on the smart-card host needs to trust the middleware client. That means that, if the middleware is corrupted, then there is no longer security in this verification.

Most difficulties regarding the implementation of certificate validation protocols on smart cards are the result of the limited processing power and memory of the card. The limited processing capability of a smart card makes the creation of a certification path on the card very time and memory consuming.

Moreover, verification protocols require some time checks to be done in order to determine the validity of the certificate. These checks cannot be done on card as the card does not have an internal clock and, consequently, knowledge of the current time or date. Therefore, the card cannot check whether the public key presented is still valid or revoked at the moment of the transaction.

To circumvent this issue, it is known to renew the certificate every couple of days by re-applying the signature on it with proper time stamping. This is a very costly measure.

A solution is known which consist in using a smart card reader such as the EAC-Box (ref. BSI TR-03131) provided with an enhancement of its functions. With this solution, the verification of the public-key certificate is delegated to the trusted reader but without ensuring forcibly the privacy about the service provider. EAC-Box reader shall support IP connection, SOAP-binding transaction, PACE protocol, Certificate storage and verification function, PINpad, etc... However, the price of the EAC-Box is a barrier for a large deployment.

Another known solution is an identity provider endowed with a power of certification authority that delivers the proof of service provider reliability through the validation of service provider's public key (or/and issuance of service provider's certificate). But this solution has many drawbacks:
- it doesn't fulfil privacy requirements (the identity provider would be aware of all details related to the SP),
- it makes the identity provider too "powerful" ("all-watching-eye") in turns the scheme too issuer-centric thereby discouraging trust from user,
- it would centralize the service provider certification delivery (which is too constraining for service providers),
- it would require from the card to be personalized with identity provider certification public key while, the identity provider should remain a neutral entity without any requirement for card personalization.

For all the reasons above, those solutions are not convenient.

There is thus a general need in the art for a method overcoming at least the aforementioned shortcomings in the art. A particular need exists in the art for a use of certificates for secure transactions in smart cards requiring the existence of a secure and efficient revocation protocol.

Moreover, a particular need exists also in the art to preserve a user privacy so that the identity provider has no hint about the very nature of the service supplied to the card bearer by the service provider.

### SUMMARY OF THE INVENTION

The present invention addresses the aforementioned drawbacks. The present invention relates to a method for a smart card to verify the validity of a certificate through a third trusted-party whereas the certificate's owner remains unknown to the third trusted-party. The present invention ensures that during the verification step of certificate, no details of the certificate's owner allowing retrieving said owner are disclosed.

The present invention is particularly relevant for an Electronic Identity card ("eID" or "EIC") which wants to access a restricted e-service that requires a given user profile depending on a service provider's requirements or policy. The present invention allows the eID to verify the validity of the service provider certificate through an identity provider whereas the service provider remains unknown to the identity provider.

Accordingly, one embodiment of the present invention is directed to provide to the card holder the proof from the identity provider that the service provider is reliable (service provider public key is valid relatively to a certification authority) while preserving the confidentiality of the service provider and related service purposes. The card is able to verify that the service provider has a valid public key which is certified by a certification authority.

With the present invention, the user equipped with his card accesses a restricted e-service that requires a given user profile
- without disclosing user's private data to the service provider,
- while proving implicitly to the service provider that the user fulfils the profile access criteria,
- while preventing identity provider from acquiring knowledge about the service requested by the card bearer to the service provider

With the invention, the card holder ensures both that the service provider is reliable and that the verification of this reliability does not disclose the service provider's details to the trusted third party to whom this verification is delegated. The present invention can be directed to any use case requiring confidentiality and reliability between three communicating parties.

The invention proposes then a method wherein the card transmits to the identity provider two elements:
- the identifier of the Certification Authority, denoted by CAref,
- an encrypted message ENC(SN)[PKEnc_{CA}], where PKEnc_{CA} is a public encryption key of the certification authority CA and SN is an identifier of the service provider.

Next, the identity provider transmits a request of status of the service provider certificate including the data (CAref, ENC(SN)[PKEnc_{CA}]) to an OCSP (Open Certificate Status Provider) or directly to the certification authority corresponding to CAref.

Next, the certification authority decrypts the value ENC(SN)[PKEnc_{CA}] and next retrieves the SP's identifier SN. Based on the value SN, the certification authority can check the validity of the certificate, i.e.
- SP's certificate is not expired
- SP's certificate is not revoked

The certification authority answers the request through (possibly) the OCSP or directly to the identity provider which can then transmit it to the card.

With the invention, the privacy of the user is preserved. Indeed, the identity provider has no hint about the very nature of the service supplied to the card bearer by the service provider.

To achieve those and other advantages, and in accordance with the purpose of the invention as embodied and broadly described, the invention proposes a method for verifying the validity of a certificate of a second party by an identity card of a proving party through a third party, wherein
a) - transmission by the identity card to the third party the name/identifier CAref of the certification authority issuing the certificate and an encrypted identifier ENC(SN)[PKEnc_{CA}], where PKEnc_{CA} is a public encryption key of the certification authority and SN is an anonymous certificate's owner identifier,
b) - requesting the revocation status of the certificate by forwarding the encrypted identifier to the certification authority associated to the received name/identifier CAref,
c) - checking the revocation status of the certificate associated to the decrypted anonymous certificate's owner identifier SN,
d) - sending the result of the revocation status to the third party which transmit it to the identity card.

Accordingly, one aspect of the present invention is directed to the identity card which verifies the correctness of
- a received assertion token from the second party, said assertion token is a signature of a message with a private key of the certification authority, said message comprising a public key PK_{SP} of the second party, the anonymous certificate's owner identifier, a public encryption key PKEnc_{CA} of the Certification Authority, and
- a received certificate chain from the second party.

When the assertion token and certificate chain verification are successful then the anonymous certificate's owner identifier is encrypted to create the encrypted identifier.

In an embodiment of the present invention, the certification authority provides the assertion token to the second party during an issuing step of the second party's certificate.

In another aspect of the present invention the checking of the revocation status step comprises the following steps:
- checking if the validity period of the anonymous identifier has reached its expiration date,
- checking if the anonymous identifier is in a revocation list.

In an embodiment of the present invention, the checking of the revocation status step is performed by a Certificate Status Protocol Server.

According to an embodiment, when the second party received a request from the proving party for a policy access to a service, said second party transmits to the proving party the requested policy access of said service and to the identity card the assertion token and its certificate. When the result of the certificate verification is valid then an identity assertion is created, said identity assertion comprises statements about attributes of the proving party according to the identity-related information of the proving party and the received policy. This identity assertion allows the proving party to prove to the second party that fulfils the received policy while staying completely anonymous.

In an embodiment of the present invention, the identity assertion can be created by the third party, the identity card or a terminal of the proving party.

The present invention also relates to a system for verifying the validity of a certificate of a second party by an identity card of a proving party through a third party, according to the method of the present invention.

### BRIEF DESCRIPTION OF THE DRAWINGS

The following detailed description will be better understood with the drawings, in which:
Figure 1 represents a block diagram illustrating the participants in the processes described in FIG.2; and
Figure 2 shows a schematic illustration of a process flow of an exemplary embodiment of the invention.

### DETAILED DESCRIPTION OF THE EMBODIMENTS OF THE INVENTION

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

Moreover, when an action is said to be performed by a device or a server, it is in fact executed by a microprocessor in this device controlled by instruction codes recorded in a program memory on the said device. An action is also ascribed to an application. This means that part of the instruction codes making up the application are executed by the microprocessor.

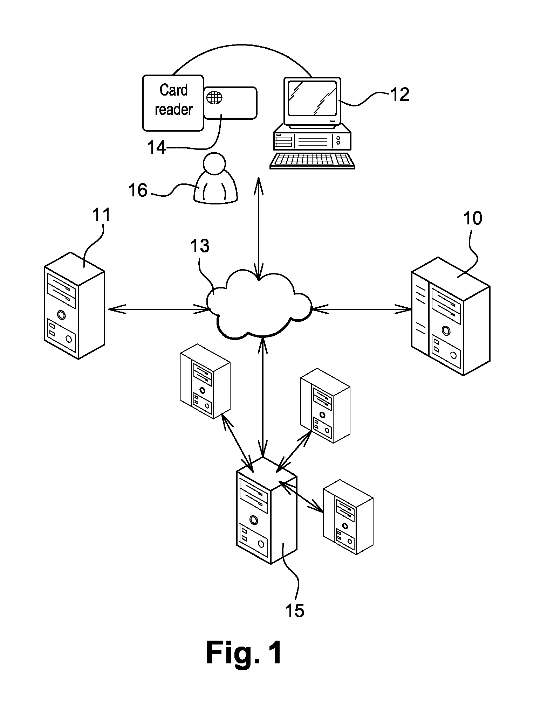

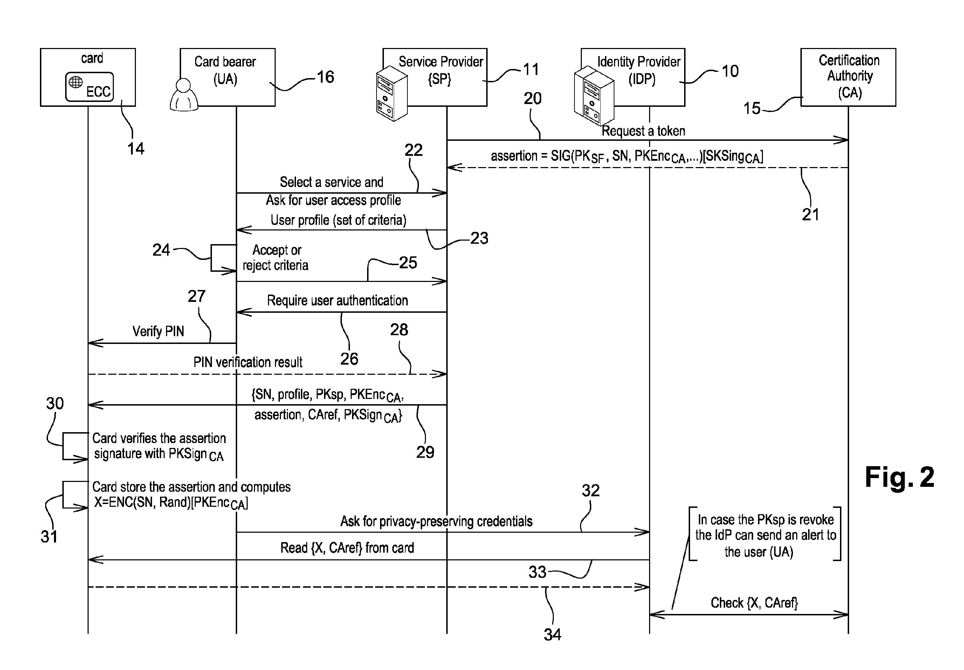

FIG. 1 is a block diagram illustrating the participants in the processes described in FIG. 2 according to an embodiment of the present invention. In this embodiment, a proving party 16 who is a user that wants to perform a transaction, e.g. to access to a service of a service provider 11. The proving party 16 executes a client application, e.g. a web browser, on a terminal 12.

The terminal 12 is connectable to the service provider as well to a third party via communication lines 13. The communication lines 13 are usually provided through a network, e.g. the Internet. In a preferred embodiment the third party is a trusted party. In the embodiment illustrated, the third party is an identity provider 10.

Specifically, the identity provider and the service provider are realized by a server and a database that are managed by each provider. The identity provider 10 is a trusted provider that comprises means to create, maintain, and manage identity information for users. The identity provider 10 is in general provided for issuing identity-related information (IRI). Under the term identity-related information IRI is understood any information related to a person or user. Identity-related information IRI comprises names, addresses, group memberships, authorization credentials, demographic data, personal preferences, calendar entries, medical, financial information, and everything else that may be stored digitally about a person or under a user name. The proving party 16 may desire such IRI e.g. for access control, authorization, personalization, authentication, login, commercial, medical, governmental or other issues. The identity provider 10 is in particular provided for the issuance of identity assertion to the service provider. The service provider is a website that hosts applications and offers services.

The proving client 16 holds an identity card 14 which stores information about the identities of said proving client. Identity card 14 takes care of identity related interaction with the service provider 11, identity provider 10, and user 16. Identity card 14 is a smart card. The identity card 14 comprises identity information about the card holder, the address of the card holder, signature keys and certificates. In the embodiments illustrated, the identity card 14 is an Electronic Identity Card ("eID" or "EIC").

The authentication of the service provider 11 is based on the use of Public-Key Infrastructures (PKIs). The identity card 14 uses those certificates to authenticate to the service provider 10 (e.g. using challenge-response method). With the invention, the identity card 14 verifies the validity of a certificate through certification authority (CA) 15 that has issued this certificate.

As used herein, the term "terminal" encompasses, for example, desktop computers, laptop computers and mobile devices and other processor-equipped devices that may be developed in the future that may be configured to permit a user to interact with other devices over a network. As used herein, a "mobile device" encompasses cellular telephones, personal data assistants (PDA), and smart telephones.

As used herein, a "server" is a computing device that may be configured to interact in an automated fashion with other devices over a network to serve content and web pages, to issue responses to communications from other network devices and to respond to queries from other network devices.

As used herein, the term "service" encompasses multi-media content, software, platform, cloud computing, network, data, security, storage, database, desktop, streaming media and so on. Service is sometimes collectively referred to as a "resource."

FIG. 2 shows a schematic illustration of a process flow of an exemplary embodiment of the invention. Therein, the process flow between the proving party 16, the identity provider 10 and the service provider 11 is depicted with labeled arrows to which respective Roman numbers are assigned. The flow is understood as being performed sequentially from top to bottom as indicated by the increasing Roman numbers. However, it should be noted that there may be multiple instances of this protocol run in parallel without specified ordering.

At step 20, the service provider 11 requests an assertion token from his certification authority 15. The certification authority 15 issues the requested assertion token and sends it in step 21 back to the service provider 11. Then, the service provider 11 stores the assertion token. In a preferred embodiment, this assertion token is requested once and stored. In an embodiment, the assertion token is requested during the issuing step of its certificate by the certification authority 15.

The assertion token is a signature of a message body with a private key of the certification authority 15. The message body comprises the public key PK_{SP} of the service provider 11, an identifier of the service provider, the public encryption key PKEnc_{CA} of the certification authority 15. The message body may comprise further elements or tokens. In an embodiment, the identifier of the service provider is a serial number SN issued by the certification authority and associated to its certificate. In general, the identifier of the service provider can be any anonymous identifier known by the certification authority. The certification authority 15 stores the assertion token with the classical X.509 certificate of the public key PK_{SP} of the service provider 11.

If the proving party 16 wants to use or access to a service of the service provider 11, it sends in step 22 a request to acquire the policy access for the desired service to the service provider 11. In step 23 the service provider 11 sends the policy access back the proving party 16. In this example we assume that the policy for the requested service requires a proof of the user to be older than 21.

As used herein, the term "policy" encompasses requirements and criteria which determine if a user which has been given permissions to access to a protected service.

At step 24, the proving party 16 can select an agreement icon displayed on the terminal to accept the criteria of the received policy by clicking on it. If the proving party clicks on a rejection icon, then the process flow will close. At step 25, the proving party sent a message to inform the service provider of the selected icon.

If the agreement icon is selected, the service provider 11 requires, at step 26, an authentication of the proving party 16. The authentication step may use a username/password or multifactor authentication. Typically, the proving party 16 is required, at step 27, to provide a confidential PIN. Upon receiving the PIN, the identity card 14 looks up the stored PIN and compares the looked-up PIN with the received PIN. When the number entered matches with the number stored in the identity card 16, a PIN verification issue is elaborated and sent to the service provider 11, at step 28.

The authentication steps 26 to 28 can be performed after that the proving party requests to access to a service. In an embodiment, the flow can be implemented without those authentication steps.

At step 29, the service provider sent its assertion token to the identity card 14. The service provider provides also to the identity card its certificate according for example to the structure of an X.509 digital certificate. This certificate comprises notably its public key PK_{SP}, its anonymous identifier which is here its serial number SN, the name/identifier of the Certification authority CAref, the public signature verification key PKSign_{CA} of the Certification Authority, the certification chain CertChain(PKSign_{CA}) of the public signature verification key PKSign_{CA}, the public encryption key PKEnc_{CA} of the Certification Authority, and so on.

At step 30, the identity card 14 checks the correctness of the received assertion token. For that, the identity card verifies using the public signature verification key PKSign_{CA} and a signature verification algorithm if σ=SIG (PK_{SP}, SN, PKEnc_{CA}, ...)[SKSign_{CA}] is a correct signature of the message "PK_{SP}, SN, PKEnc_{CA} ...", i.e. if VERIFSIG(σ)[PKSign_{CA}] outputs "correct".

The identity card checks if the certification authority CA is a well-known certification authority. More precisely, the card checks the correctness of the certification chain CertChain(PKSign_{CA}) and that the root of the chain is contained in the list of trusted certification authority. In an embodiment, it is assumed that this list is in the identity card 14 at personalization stage. In another embodiment, this list can be loaded after the personalization step by a trusted party.

If the assertion token or certificate chain verification fails in, the identity card will notify the proving party that the service provider certificate is tampered and should be disposed. If on the other hand the assertion token and the certificate chain are successfully verified, the identity card, at step 31, encrypts the serial number SN with the public encryption key PKEnc_{CA} of the CA, i.e. the identity card computes X=ENC (SN)[PKEnc_{CA}]. In an embodiment, the public-key encryption algorithm Enc is a probabilistic encryption scheme. In another embodiment, the identifier is encrypted with a random value. In this case, the identity card computes X=ENC (SN,Random)[PKEnC_{CA}.] Any known encryption algorithm can be used.

In an embodiment, the identity card stores the assertion token when it is verified successfully.

The verification way proposed by the present invention allows overcoming the drawbacks of the limited processing capability of a card.

When the assertion token and certificate chain verification is successful, an identity assertion with statements about attributes of the proving party 16 is created, at step 32. At step 32, this identity assertion is created according to the identity-related information (IRI) based on the received policy. The step 32 can be performed by the identity provider, the Identity card 14 or the terminal 12.

In the embodiment illustrated in FIG.2, the identity assertion is created by the identity provider, before delivering it to the service provider. For that, the identity provider may request some information from the proving party 16, such as a user name and password, in order to authenticate the proving party. And from the IRI stored and the policy, the identity provider deduces the identity assertion.

This identity assertion allows to the proving party 16 to prove to the service provider 11, while staying completely anonymous and unlinkable, that he fulfills the received policy. In this example the identity assertion comprises the assertion that the proving party 16 is older than 21. This identity assertion can be derived from the birth date of the credentials.

Before any communication between the identity provider and the proving party a mutual authentication may be performed and the communication channel secured.

Today, it is known several standards for exchanging authentication and authorization data to obtain this identity assertion, in particular, between an identity provider, a service provider and a principal (user). These standards define method to create and provide the identity assertion to the service provider while guaranteeing the proving party 16 completely anonymous and unlinkable. One of the standards is known under the name of Security Assertion Markup Language (SAML). Those standards are well known by the person in the art and do not need to be described anymore herein.

At step 32, the identity card requests the identity provider to verify certificate revocation status. At step 33, the identity provider requests the name/identifier of the certification authority CAref from the identity card. The identity card issues the requested CAref with the encrypted X=ENC (SN, Random)[PKEnc_{CA}] and sends it in step 34 back to the identity provider 10.

The identity provider forwards the encrypted X=ENC (SN)[PKEnc_{CA}] to the Certification authority corresponding to the received CAref. The Certification authority decrypts the message X with its private key decryption key SKEncCA.

Then the Certification authority performs a revocation check in order to figure out if the certificate associated to the decrypted anonymous identifier (serial number) is still valid or has been revoked and is no longer entitled to use content. For the revocation check, an appropriate server like an Online Certificate Status Protocol server OCSP accessible for this purpose can verify that the certificate associated to the decrypted serial number is still valid. An indication about a result of the revocation check is communicated to the identity provider. If the status of the certificate is not found valid, an alert may be communicated to the proving party by the identity provider.

When the certificate is valid, the identity assertion is sent to the service provider 11. After the receipt of the identity assertion the service provider 11 checks the identity assertion for validity. Then, the service provider 11 sends a result, e.g. the requested service, to the proving party 16. The requested service could be e.g. a webpage that is only accessible for persons older than 21.

At this point, the identity data of the service provider has not been revealed to the identity provider. However, the proving party can be assured that the data is from the intended service provider and that the data has not been tampered with.

The present invention is defined, in its broadest sense, as a method of checking by the card the validity of a public-key certificate in two main steps:
1) The card verifies by itself:
   - the correctness of a signature. More precisely, the card verifies the public signature verification key PKSign_{CA},
   - that the certification authority CA is a well-known certification authority.
   More precisely, the card checks the chain of certificates of PKSign_{CA} and that the root of the chain is contained in the list of trusted certification authority, 2) The card delegates the following steps through the identity provider
   - the verification that SP's certificate is not expired
   - the verification that SP's certificate is not revoked.

With the proposed invention, it is no need to renew certificate on a short period basis.

## Claims

1. Method for verifying the validity of a certificate of a second party by an identity card of a proving party through a third party, wherein
a) - transmission by the identity card to the third party the name/identifier CAref of the certification authority issuing the certificate and an encrypted identifier ENC(SN)[PKEnc_{CA}], where PKEnc_{CA} is a public encryption key of the certification authority and SN is an anonymous certificate's owner identifier,
b) - requesting the revocation status of the certificate by forwarding the encrypted identifier to the certification authority associated to the received name/identifier CAref,
c) - checking the revocation status of the certificate associated to the decrypted anonymous certificate's owner identifier SN,
d) - sending the result of the revocation status to the third party which transmits it to the identity card.

2. Method for verifying the validity of a certificate according to the previous claim, wherein the identity card verifies the correctness of
- a received assertion token from the second party, said assertion token is a signature of a message with a private key of the certification authority, said message comprising a public key PK_{SP} of the second party, the anonymous certificate's owner identifier, a public encryption key PKEnc_{CA} of the Certification Authority,
- a received certificate chain from the second party,
when the assertion token and certificate chain verification are successful then the anonymous certificate's owner identifier is encrypted to create the encrypted identifier.

3. Method for verifying the validity of a certificate according to the previous claim, wherein the certification authority provides the assertion token to the second party.

4. Method for verifying the validity of a certificate according to any of the claims 2 to 3, wherein the assertion token is provided during a issuing step of the second party's certificate.

5. Method for verifying the validity of a certificate according to any previous claims, wherein the checking of the revocation status step comprises the following steps:
- checking if the validity period of the anonymous identifier has reached its expiration date,
- checking if the anonymous identifier is in a revocation list.

6. Method for verifying the validity of a certificate according to any previous claims, wherein the checking of the revocation status step is performed by a Certificate Status Protocol Server.

7. Method for verifying the validity of a certificate according to any claims 2 to 6, wherein when the second party received a request from the proving party for a policy access to a service, said second party transmits to the proving party the requested policy access of said service and to the identity card the assertion token and its certificate.

8. Method for verifying the validity of a certificate according to the previous claim, wherein when the result of the certificate verification is valid then an identity assertion is created, said identity assertion comprises statements about attributes of the proving party according to the identity-related information of the proving party and the received policy, this identity assertion allows the proving party to prove to the second party that fulfils the received policy while staying completely anonymous.

9. Method for verifying the validity of a certificate according to the previous claim, wherein the identity assertion is created by the third party, the identity card or a terminal of the proving party.

10. Method for verifying the validity of a certificate according to any of the previous claims, wherein the identity card is an electronic identity card, the second party a service provider and the third party an identity provider.

11. System for verifying the validity of a certificate of a second party by an identity card of a proving party through a third party, according to any previous claims.
